# NEW EUROPEAN PATENT SPECIFICATION

(11) **EP 0 716 251 B2**
(45) Date of publication and mention of the opposition decision: **20.09.2006**
(45) Mention of the grant of the patent: 07.03.2001
(21) Application number: 95118431.6
(22) Date of filing: 23.11.1995
(51) Int. Cl.: F16H 61/46

(54) **Control system for variable displacement hydraulic pumps in automotive type closed circuit hydrostatic drives**
Steuerung für hydraulische Pumpen mit variabler Fördermenge in hydrostatischen Antrieben mit geschlossenem Kreislauf für Fahrzeuge
Commande de pompes hydrauliques à déplacement variable pour entraînements hydrostatiques à circuit fermé d'automobiles

(30) Priority: 30.11.1994 IT RE940100
(43) Date of publication of application: 12.06.1996
(73) Proprietor: SAMHYDRAULIK S.p.A., 42100 Reggio Emilia (IT)
(72) Inventor: Brevini, Corrado, Rivalta (RE) (IT); Brevini, Maurizio, Rivalta (RE) (IT)
(74) Representative: Modiano, Micaela Nadia

(56) References cited:
- EP-A- 0 056 865
- EP-A- 0 458 129
- EP-A- 0 530 842
- DE-A- 3 903 188
- DE-A- 4 234 139
- DE-C- 4 319 280
- GB-A- 1 279 693

## Description

This invention concerns a control system for variable displacement pumps in automotive type, closed circuit hydrostatic power drives.

As it is known, an automotive type hydrostatic transmission allows to obtain a continuously and infinitely variable-ratio drive between primary engine (usually endothermic) and the output power shaft of the driving motor, namely an hydrostatic motor with fixed or variable displacement, in such a way that the whole system behaves as an hydrodynamic drive with a continuously and infinitely variable ratio. Furthermore, in an automotive type hydrostatic transmission the variable displacement pump swept volume is directly related to the pump rotation speed, therefore to the engine rotation speed, in such way that, at low rotation speed, the pump displacement is close to zero, hence is kept low the pump absorbed torque. In this way the engine can quickly increase its rotation speed, in order to reach higher power performances. Last, in an automotive type hydrostatic transmission the load induced pressure causes a reduction in pump displacement which is inversely proportional to this pressure, so that the engine is kept free from overloading that would come at high working pressure and it can regularly function also with quite high working pressure values.

The traditional automotive type hydrostatic drives are characterised by the lack of braking action during the vehicle deceleration, asking for a frequent use of the mechanic brakes or for the presence of a proper hydraulic flow control valve, piloted by the braking circuit hydraulic pressure, this causes overheating and wear of the braking system components. Again, the known automotive type hydrostatic transmissions need high engine rotation speeds, hence not allowing a smooth control of the transmitted power and keep the engine at high specific fuel consumption rotation speed. Finally, the mentioned transmissions usually do not allow a smooth feeling of the lever actuated throttle function, this resulting in sharp operations of the control, the control over the transmission absorbed torque is also scarcely reproducible, due to the control mechanical hysteresis, which amount is mainly random.

DE-39 03 188 A1 disclosed a control system for variable displacement hydraulic pumps in automotive type, closed circuit hydrostatic drives, as defined in the preamble of claim 1.

This invention's technical aim is to offer a pump control system which avoids the traditional control systems drawbacks.

This purpose is pursued using an automotive type pump control as defined in claim 1.

More details can be found in the following description, illustrating an example of system layout:

Fig. 1 shows an hydraulic layout of the control system according to this invention.

Fig. 2 shows a cutaway drawing of the flow control valve.

Fig. 3 shows a cutaway drawing of the pressure reducing valve with fixed adjustment.

Fig. 4 shows a cutaway drawing of the pressure reducing valve with lever actuated adjustment.

Fig. 5 shows a cutaway drawing of the load sensing spool type valve.

Fig. 6 shows a cutaway drawing of the double check valve.

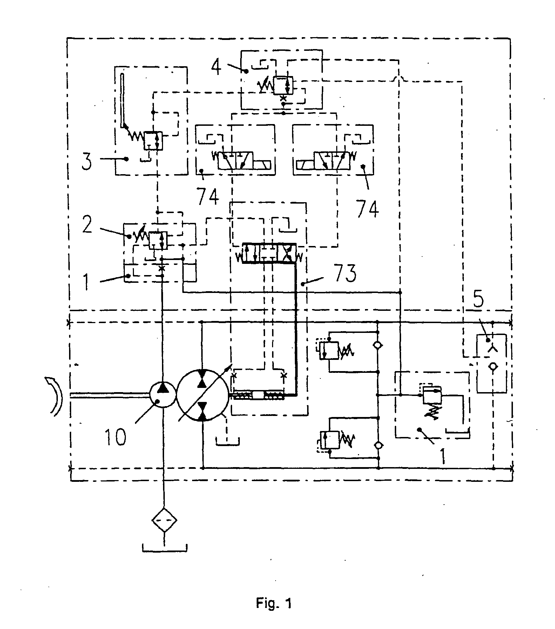

In fig. 1 there are: the flow control valve (1), the pressure reducing valve with fixed adjustment (2), the pressure reducing valve with lever actuated adjustment (3), the load sensing spool type valve (4), the double check valve (5), the auxiliary pump (10), the hydraulic proportional servo actuator mechanically feed-back (73), the electrically operated three-ways two-positions directional control valves (74).

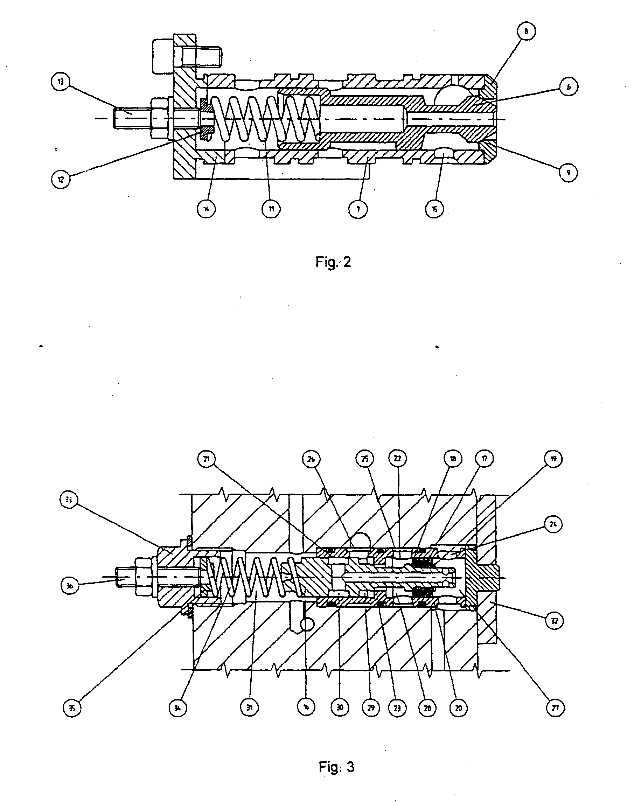

In fig. 2 there are: the flow control valve (1) which is formed by a shutter (6) movable into a bushing (7) that is closed on one of its sides by a spacer (8). On the spacer (8) is designed a seat for a differential area relief valve that controls the auxiliary pump (indicated with (10) in fig. 1) delivery. The shutter (6) is pushed on the seat (9) by the spring (11), which is fit on the spring retainer (12). The spring retainer (12) position is adjustable by acting on the adjustment screw (13) which is fit on the cover (14). The flow control valve is operated via the auxiliary pump generated flow that crosses a calibrated orifice (15) in such a way that it generates a pressure drop which is proportional to the pump flow, therefore to the pump rotation speed.

In fig. 3 there are: the pressure reducing valve with fixed adjustment (2) which is formed by a spool (16) with a bushing (17) on one of its ends which is axially hold into position between the spool's (16) shoulder (18) and the spring ring (19). The spool (16) can move inside the sleeve (20). Inside the bushing are designed two coaxial cylindrical seats (21 & 22) separated by the shoulder (23)..The sleeve (20) feature three radial cavities. (24, 25 & 26). The spool (16), the bushing (17) and the sleeve (20) define cavities which are approximately annular (27, 28, 29, 30 & 31). These cavities are respectively: at the pressure existing after the calibrated orifice; at the return line pressure; at the pressure proportional to the rotation speed; at the pressure existing after the calibrated orifice; at the pressure existing before the calibrated orifice. The cavity (27) is closed on one side by the cover (32), while the cavity (31) is closed on one side by the plug (33). The spool (16) is pushed by the spring (34) which is inside the cavity (31), fit on the spring retainer (35). The spring retainer adjustment is acted via the adjustment screw (36) fit on the plug (33). All the different pressures on cavities (27, 28, 29, 30 & 31) act on the spool (16) and bushing (17); this, combined with the force generated by the spring (34), create a pressure inside cavity (29) which is proportional to the pump rotation speed, so that the pressure reducing valve with fixed adjustment (2) is piloted by the pressure drop generated by the flow control valve (1), this pressure drop being proportional to the rotation speed.

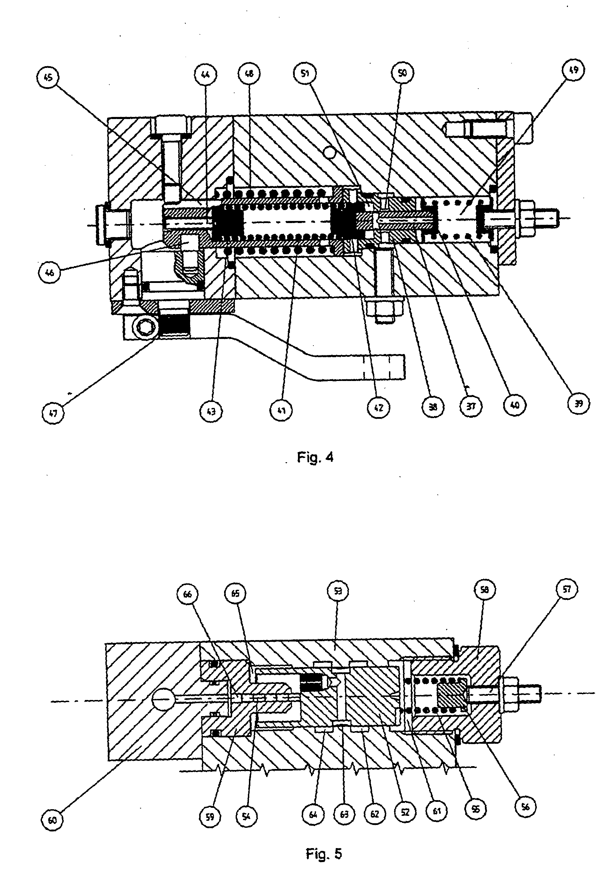

In fig. 4 there are: the pressure reducing valve with lever actuated adjustment (3), which is formed by a spool (37) movable into a bushing (38). The spool (37) is pushed by the spring (39), fit on the spring retainer (40) and is also pushed by the spring (41) fit on the spring retainer (42). The spring (41) is also fit on the spring retainer (43) which position can be adjusted acting on the adjustment screw (44) fit on the piston (45). The piston (45) is moved via the eccentric pin (46) of the shaft (47), which is actuated by an external lever. The piston (45) and the external lever are placed into rest position by the force of the backup spring (48). The spool (37) and the bushing (38) define cavities approximately annular (49, 50 & 51) which are, respectively: at the modulated pressure, which is generated by the pressure reducing valve with lever actuated adjustment (3); at a pressure, which is proportional to the pump rotation speed, that is generated by the pressure reducing valve with fixed adjustment (2); at the return line pressure. The pressure reducing valve with lever actuated adjustment (3) works as a pressure reducing valve with lever controlled adjustment, having a backup spring whose force, that is proportional to the valve adjustment pressure, is adjustable acting on the screw (44).

In fig. 5 there are: the spool type load sensing valve (4) which is formed by a spool (52) that can move into the valve casing (53). The spool is pushed by the piloting piston (54) and the adjustment spring (55), which is fit on the spring retainer (56) and is adjustable acting on the screw (57) fit on cover (58). The piloting piston (54) is movable into a guide bushing (59) which is closed on one side by the cover (60). The spool (52), the valve casing (53), the cover (58), the piloting piston (54) and the guide bushing (59) define cavities which are approximately annular (61, 62, 63, 64 & 65) and are, respectively: at the modulated pressure that is generated by the pressure reducing valve with lever actuated adjustment (3); at the return line pressure; at the modulated pressure that is generated by the spool type load sensing valve (4); at the pressure after the calibrated orifice (15); at the modulated pressure that is generated by the spool type load sensing valve (4). At the free end of the piloting piston (54), into the cavity (66) of the guide bushing (59), acts the load induced pressure, that is the highest between the two pressures that are present into the connection lines from variable pump to hydrostatic motor. The above described spool type load sensing valve (4) allows to generate a modulated pressure which is inversely proportional to the load induced pressure but directly proportional to the pump rotation speed; moreover, the modulated pressure value depends on the adjustment controlled by the screw (57). The modulated pressure acts on the hydraulic proportional servo actuator mechanically feed-back into position (73) of the variable pump and is controlled by the electrically operated three-ways two-positions directional control valves (74), that choose the direction of movement or, on option, by a four-ways three-positions electrically operated directional control valve. The hydraulic proportional servo actuator mechanically feedback into position (73) varies the pump displacement in such a way that the pump displacement is directly proportional to the modulated pressure that is generated by the spool type load sensing valve (4). The variable pump displacement is so directly proportional to the pump rotation speed and inversely proportional to the load induced pressure.

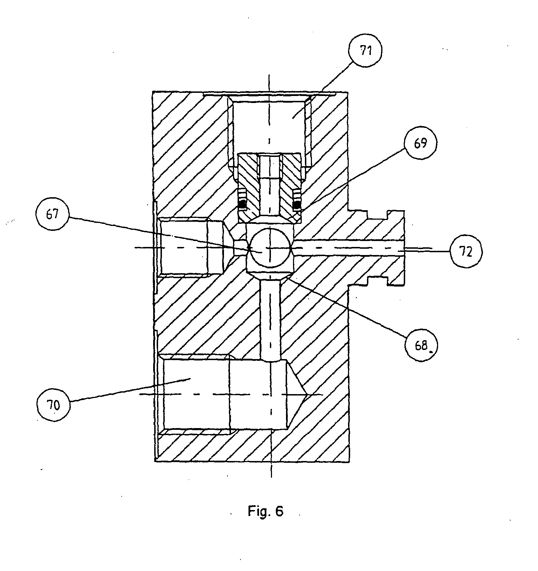

In fig. 6 there are: the double check valve (5), that is formed by a ball (67) which is pushed by the load induced pressure towards the seat (68) or the seat (69) depending on which of these two pressures that are present into the connection lines between variable pump and hydrostatic motor is the highest. In the cavities (70 & 71) there are, respectively, the two different pressures that are into the connection lines: in such a way, the hole (72) is at the highest of the two mentioned pressures, that is the load induced pressure.

As it can be noted, the invention perfectly matches the aim. In particular, since the load induced pressure acts also during the vehicle deceleration, being the mentioned pressure generated by the hydrostatic motor when it is dragged, the variable pump swivels towards the minimum displacement, dragging the engine at high rotation speed: this causes an effective braking action, with no need for the presence of piloted flow control valves on the braking circuit, avoiding overheating and wear of the mechanical brake elements. The known automotive type hydrostatic drives behave exactly opposite way, that is in such a transmission the variable pump swivels towards the maximum displacement during the vehicle deceleration, dragging the engine at low rotation speed, thus causing a scarcely effective braking action. This invention also allows to reach the engine highest output torque at the intermediate rotation speed range, that correspond to the maximum output torque and to the minimum specific fuel consumption rotation speed range. This is permitted by the particular pressure reducing valve adjustment, which allows to reach high modulated pressure values, even with low rotation speeds. The pressure reducing valve with lever actuated adjustment (3) acts to keep the modulated pressure at a maximum value that is in correspondence with the primary engine maximum output torque, avoiding overloading due to the highest rotation speeds. In this way the engine is utilised at the maximum output torque even at the intermediate rotation speeds, in such a way to reduce the fuel consumption and to permit a better control smoothness. Further, the above described system allows a perfect control of the modulated pressure throttle function: this is advisable during the slow speed movements of the vehicle, or whenever should be necessary to use part of the engine output power to operate other devices, or to quickly arrest the vehicle. Such a result is obtained due to the use of the pressure reducing valve with lever actuated adjustment (3), which is basically a pressure reducing valve: in this way the modulated pressure value is simply determined by the control lever angular position, or else the lever position allows a direct, reproducible and smooth control on modulated pressure values. In known automotive type hydrostatic drives the throttle function is obtained using, on choice, adjustment variation devices on the pressure reducing valve (2) or variable diaphragm valves, in which the modulated pressure values are controlled by the means of the variation of the cross section of a port: in this case the valve adjustment is influenced by the fluid viscosity, thus by the fluid temperature, this resulting in a scarcely smooth and/or reproducible operation of the throttle function. This invention also permits a variable pump control function, by the means of an external pressure reducing valve, allowing a remote proportional hydraulic control of the hydrostatic power drive: for example via an hydraulic proportional joystick or with a pressure reducing valve placed on the vehicle control panel. In the same way it is possible to control the hydrostatic power drive using an electrically operated pressure reducing valve, mounted on the variable pump or, on choice, mounted in-line on the hydraulic circuit connections: in this case the control is remotely operated via electric wires, featuring a potentiometer or an electronic joystick control or else a radio control. Moreover, the described control system works practically uninfluenced by the mechanical hysteresis present in the variable pump displacement control device: this because its particular design features an hydraulic proportional servo actuator which is mechanically feed-back into position, allowing to highly reduce the mechanical friction effects on the pump displacement variations. Last, this device can be implemented of a pressure cut off valve that can cut down the pump displacement whenever the pump working pressure would exceed a pre-set value: this in order to avoid that the pump delivery should be discharged through the anti-shock valves, thus reducing fuel consumption and the fluid working temperature.

## Claims

1. A control system for variable displacement hydraulic pumps in automotive type closed circuit hydrostatic drives, comprising:
a variable displacement pump adapted to be connected to a hydrostatic motor by means of connection lines;
an auxiliary pump (10) connected to a flow control valve (1) and a pressure reducing valve with fixed adjustment (2);
a pressure reducing valve with lever actuated variable adjustment (3), connected to a load sensing spool valve (4);
an hydraulic proportional servo-actuator (73) with mechanic feedback positioning system, connected to said variable displacement pump and adapted to drive directional control valves (74);
a double check valve (5) connected to said variable displacement pump;
said load sensing spool valve (4) being designed so as to generate a modulated pressure which is inversely proportional to a load induced pressure and directly proportional to the rotation speed of the variable displacement pump, the variable displacement of said variable displacement pump being directly proportional to said modulated pressure and acting upon the servo-actuator (73) which in turn changes the pump displacement,
said load sensing spool valve (4) comprising:
- a valve casing (53), and
- a spool (52) movable in said valve casing (53);
**characterized in that**
- a first cavity (66) is defined in said valve casing (53) and connected to a load induced pressure;
- a piloting piston (54) is movable in said valve casing (53) between said first cavity (66) and a first end of said spool (52) so as to induce the load pressure to said spool (52);
- a second cavity (61) is defined between a second end of said spool (52) and said valve casing (53) and connected to said pressure reducing valve with lever actuated variable adjustment (3);
- a spring (55) is arranged in said second cavity (61) and acting on the second end of said spool (52) and in opposed direction to said piloting piston (54);
- a third cavity (62) is connected to a fluid return line;
- a fourth cavity (64) at a pressure after a calibrated orifice (15) of said flow control valve (1); and
- a fifth cavity (65) is defined between the first end of said spool (52) and said valve casing (53), said fifth cavity (65) being, at the modulated pressure generated by said load sensing valve (4).

2. The control system of claim 1, **characterized in that** said modulated pressure is applied to said hydraulic proportional servo-actuator (73) with mechanic feedback positioning system.

3. The control system of claim 1, **characterized in that** said modulated pressure is controlled by said directional control valves (74).

4. The control system of claim 3, **characterized in that** said modulated pressure is controlled by a electrically operated three-way two-position directional control valves (74).

5. The control system of claim 3, **characterized in that** said modulated pressure is controlled by a electrically operated four-way three-position directional control valves.

6. The control system of claim 1, **characterized in that** said flow control valve (1) comprises a shutter (6) movable into a bushing (7), said flow control valve being supplied by said auxiliary pump (10) through the calibrated orifice (15), a pressure drop proportional to the rotation speed of the variable pump being derived.

7. The control system of claim 1, **characterized in that** said pressure reducing valve with fixed adjustment (2) comprises a further first spool (16) movable within a sleeve (20) provided at one of its end with a bushing (17), said sleeve (20) being provided with three radial cavities (24, 25, 26), a pressure proportional to the rotation speed of the variable displacement pump being generated.

8. The control system of claim 1, **characterized in that** said pressure reducing valve with lever actuated adjustment (3) comprises a further second spool (37) movable into a bushing (38) and pushed by a spring (41) fitted on a spring retainer (42); the position of said spring retainer (42) being adjustable by means of an adjustment screw (44) arranged on a spring pushing piston (45) which is axially moved by means of an eccentric pin (46) in turn operated by said lever.

9. The control system of claim 1, **characterized in that** said double check valve (5) comprises a ball (67) pushed by said load induced pressure towards two distinct seats (68, 69), depending on which of the connection lines between said variable displacement pump and said motor is at the highest pressure, said highest pressure being supplied, through said connection line, through an orifice.

10. The control system of claim 1, **characterized in that** it further comprises an external pressure reducing valve adapted to remotely proportionally control said variable displacement pump.

11. The control system of claim 1, **characterized in that** an electrically operated pressure reducing valve is mounted on said variable displacement pump.

## Patentansprüche

1. Steuerung für hydraulische Pumpen mit variabler Verdrängung in hydrostatischen Antrieben mit geschlossenem Kreislauf für Fahrzeuge, aufweisend:
eine Pumpe mit variabler Verdrängung, die dafür ausgelegt ist, durch Verbindungsleitungen mit einem hydrostatischen Motor verbunden zu werden;
eine Hilfspumpe (10), die mit einem Strömungsregulierungsventil (1) und einem Druckminderventil mit fester Einstellung (2) verbunden ist;
ein Druckminderventil mit einer hebelbetätigten variablen Einstellung (3), das mit einem die Belastung erfassenden Spulenventil (4) verbunden ist;
einen proportionalen hydraulischen Servoantrieb (73) mit Positionierungssystem mit mechanischer Rückkopplung, der mit der Pumpe mit variabler Verdrängung verbunden ist und dafür ausgelegt ist, Wegeventile (74) anzutreiben;
ein Doppelrückschlagventil (5), das mit der Pumpe mit variabler Verdrängung verbunden ist;
wobei das die Belastung erfassende Spulenventil (4) so ausgelegt ist, daß es einen modulierten Druck erzeugt, der umgekehrt proportional zu einem durch Belastung hervorgerufenen Druck ist und direkt proportional zur Rotationsgeschwindigkeit der Pumpe mit variabler Verdrängung ist, wobei die variable Verdrängung der Pumpe mit variabler Verdrängung direkt proportional zum modulierten Druck ist und auf den Servoantrieb (73) wirkt, der wiederum die Pumpenverdrängung ändert,
wobei das die Belastung erfassende Spulenventil (4) umfaßt:
- ein Ventilgehäuse (53) und
- eine Spule (52), die in dem Ventilgehäuse (53) beweglich ist;
**dadurch gekennzeichnet, daß**
- ein erster Hohlraum (66) in dem Ventilgehäuse (53) definiert und mit einem durch eine Belastung induzierten Druck verbunden ist;
- ein Vorsteuerkolben (54) in dem Ventilgehäuse (53) zwischen dem ersten Hohlraum (66) und einem ersten Ende der Spule (52) beweglich ist, um den Belastungsdruck auf die Spule (52) zu induzieren;
- ein zweiter Hohlraum (61) zwischen einem zweiten Ende der Spule (52) und dem Ventilgehäuse (53) definiert und mit dem Druckminderungsventil mit hebelbetätigter variabler Einstellung (3)verbunden ist;
- eine Feder (55) in dem zweiten Hohlraum (61) angeordnet ist und auf das zweite Ende der Spule (52) und in entgegengesetzter Richtung zu dem Vorsteuerkolben (54) wirkt;
- ein dritter Hohlraum (62) mit einer Fluidrückführungsleitung verbunden ist;
- ein vierter Hohlraum (64) auf einem hinter einer kalibrierten Öffnung (15) des Strömungsregulierungsventils (1) herrschenden Druck liegt; und
- ein fünfter Hohlraum (65) zwischen dem ersten Ende der Spule (52) und dem Ventilgehäuse (53) definiert ist, wobei der fünfte Hohlraum (65) auf dem modulierten Druck liegt, der durch das die Belastung erfassende Spulenventil (4) erzeugt wird.

2. Steuerung nach Anspruch 1, **dadurch gekennzeichnet, daß** der modulierte Druck auf den proportionalen hydraulischen Servoantrieb (73) mit Positionierungssystem mit mechanischer Rückkopplung ausgeübt wird.

3. Steuerung nach Anspruch 1, **dadurch gekennzeichnet, daß** der modulierte Druck von den Wegeventilen (74) gesteuert wird.

4. Steuerung nach Anspruch 3, **dadurch gekennzeichnet, daß** der modulierte Druck von einem elektrisch betätigten Wegeventil (74) mit drei Wegen und zwei Positionen gesteuert wird.

5. Steuerung nach Anspruch 3, **dadurch gekennzeichnet, daß** der modulierte Druck von einem elektrisch betätigten Wegeventil mit vier Wegen und drei Positionen gesteuert wird.

6. Steuerung nach Anspruch 1, **dadurch gekennzeichnet, daß** das Strömungsregulierungsventil (1) einen Verschluß (6) aufweist, der in eine Laufbuchse (7) hinein bewegbar ist, wobei das Strömungsregulierungsventil durch die Hilfspumpe (10) durch die kalibrierte Öffnung (15) versorgt wird, wobei ein Druckabfall proportional zur Rotationsgeschwindigkeit der variablen Pumpe herbeigeführt wird.

7. Steuerung nach Anspruch 1, **dadurch gekennzeichnet, daß** das Druckminderventil mit fester Einstellung (2) eine weitere erste Spule (16) aufweist, welche innerhalb eines kurzen Rohrs (20) bewegbar ist, das an einem seiner Enden mit einer Laufbuchse (17) versehen ist, wobei das kurze Rohr (20) mit drei radialen Hohlräumen (24, 25, 26) ausgestattet ist, wobei ein zur Rotationsgeschwindigkeit der Pumpe mit variabler Verdrängung proportionaler Druck erzeugt wird.

8. Steuerung nach Anspruch 1, **dadurch gekennzeichnet, daß** das Druckminderventil mit durch Hebel betätigbarer Einstellung (3) eine weitere zweite Spule (37) aufweist, die in eine Laufbuchse (38) hinein bewegbar ist und von einer Feder (41) gedrückt wird, die auf einen Federhalter (42) aufgepaßt ist, wobei die Position des Federhalters (42) mittels einer Einstellschraube (44) einstellbar ist, welche auf einem Federschubkolben (45) angeordnet ist, welcher durch einen exzentrischen Stift (46) axial bewegt wird, der wiederum durch den Hebel betätigt wird.

9. Steuerung nach Anspruch 1, **dadurch gekennzeichnet, daß** das Doppelrückschlagventil (5) eine Kugel (67) aufweist, die durch den durch die Belastung hervorgerufenen Druck in Abhängigkeit davon, auf welcher der Verbindungsleitungen zwischen der Pumpe mit variabler Verdrängung und dem Motor der höchste Druck anliegt, zu zwei verschiedenen Sitzen (68, 69) hin gedrückt wird, wobei der höchste Druck durch die Verbindungsleitung durch eine Öffnung zugeführt wird.

10. Steuerung nach Anspruch 1, **dadurch gekennzeichnet, daß** je ein Druckminderventil für den externen Druck aufweist, das dafür ausgelegt ist, die Pumpe mit variabler Verdrängung proportional fernzusteuern.

11. Steuerung nach Anspruch 1, **dadurch gekennzeichnet, daß** ein elektrisch betätigtes Druckminderventil auf der Pumpe mit variabler Verdrängung angebracht ist.

## Revendications

1. Système de commande pour pompes hydrauliques à déplacement variable utilisé dans des transmissions hydrostatiques à circuit fermé du type automatique, comprenant :
une pompe à déplacement variable adaptée pour être reliée à un moteur hydrostatique au moyen de conduites de liaison ;
une pompe auxiliaire (10) reliée à une soupape de commande du débit (1) et à une soupape de réduction de la pression à réglage fixe (2) ;
une soupape de réduction de la pression à réglage variable actionnée par levier (3), reliée à une soupape à tiroir (4) de détection de la charge ;
un servo-actionneur hydraulique proportionnel (73) muni d'un système de positionnement à réaction mécanique, relié à ladite pompe à déplacement variable et adapté pour commander des soupapes de commande directionnelles (74) ;
un clapet anti-retour double (5) relié à ladite pompe à déplacement variable ; ladite soupape à tiroir de détection de la charge (4) étant conçue pour engendrer une pression modulée qui est inversement proportionnelle à une pression induite par la charge et directement proportionnelle à la vitesse de rotation de la pompe à déplacement variable, le déplacement variable de ladite pompe à déplacement variable étant directement proportionnel à ladite pression modulée et agissant sur le servo-actionneur (73) qui, à son tour, fait varier le déplacement de la pompe,
ladite soupape à tiroir de détection de la charge (4) comprenant :
- un corps de soupape (53), et
- un tiroir (52) mobile dans ledit corps de soupape (53) ;
**caractérisé en ce que**
- une première cavité (66) est définie dans ledit corps de soupape (53) et reliée à une pression induite par la charge ;
- un piston de pilotage (54) est mobile dans ledit corps de soupape (53) entre ladite première cavité (66) et une première extrémité dudit tiroir (52) de façon à induire la charge de pression audit tiroir (52) ;
- une deuxième cavité (61) est définie entre une deuxième extrémité dudit tiroir (52) et ledit corps de soupape (53) et est reliée à ladite soupape de réduction de la pression à réglage variable actionnée par levier (3),
- un ressort (55) est agencé dans ladite deuxième cavité (61) et agissant sur la deuxième extrémité dudit tiroir (52) et dans une direction opposée audit piston de pilotage (54) ;
- une troisième cavité (62) est reliée à une conduite de retour de fluide ;
- une quatrième cavité (64) est à une pression après un orifice calibré (15) de ladite soupape de commande du débit (1) ; et
- une cinquième cavité (65) est définie entre la première extrémité dudit tiroir (52) et ledit corps de soupape (53), ladite cinquième cavité (65) étant à la pression modulée engendrée par ladite soupape de détection de la charge (4).

2. Système de commande selon la revendication 1, **caractérisé en ce que** ladite pression modulée est appliquée audit servo-actionneur hydraulique proportionnel (73) avec un système de positionnement à réaction mécanique.

3. Système de commande selon la revendication 1, **caractérisé en ce que** ladite pression modulée est commandée par lesdites soupapes de commande directionnelles (74).

4. Système de commande selon la revendication 3, **caractérisé en ce que** ladite pression modulée est commandée par des soupapes de commande directionnelles à trois voies et deux positions actionnées électriquement (74).

5. Système de commande selon la revendication 3, **caractérisé en ce que** ladite pression modulée est commandée par des soupapes de commande directionnelles à quatre voies et trois positions actionnées électriquement.

6. Système de commande selon la revendication 1, **caractérisé en ce que** ladite soupape de commande du débit (1) comprend un obturateur (6) pouvant s'engager dans une douille (7), ladite soupape de commande du débit étant alimentée par ladite pompe auxiliaire (10) à travers l'orifice calibré (15), une chute de pression proportionnelle à la vitesse de rotation de la pompe variable étant ainsi dérivée.

7. Système de commande selon la revendication 1, **caractérisé en ce que** ladite soupape de réduction de la pression à réglage fixe (2) comprend un premier tiroir supplémentaire (16) mobile à l'intérieur d'une fourrure (20) munie d'une douille (17) à une de ses extrémités, ladite fourrure (20) étant munie de trois cavités radiales (24, 25, 26), une pression proportionnelle à la vitesse de rotation de la pompe à déplacement variable étant ainsi engendrée.

8. Système de commande selon la revendication 1, **caractérisé en ce que** ladite soupape de réduction de la pression à réglage actionné par levier (3) comprend un deuxième tiroir supplémentaire (37) mobile dans un manchon (38) et poussé par un ressort (41) monté sur un organe de retenue (42) ; la position dudit organe de retenue de ressort (42) pouvant être réglée au moyen d'une vis de réglage (44) agencée sur un piston (45) de poussée du ressort qui est déplacé axialement au moyen d'un tourillon excentrique (46) actionné à son tour par ledit levier.

9. Système de commande selon la revendication 1, **caractérisé en ce que** ledit clapet anti-retour double (5) comprend une bille (67) poussée par ladite pression induite par la charge vers deux sièges distants (68, 69), selon que l'une ou l'autre des conduites de liaison entre ladite pompe à déplacement variable et ledit moteur est à la plus haute pression, ladite plus haute pression étant fournie par l'intermédiaire de ladite conduite de liaison, à travers un orifice.

10. Système de commande selon la revendication 1, **caractérisé en ce qu'**il comprend en outre une soupape extérieure de réduction de la pression adaptée pour commander ladite pompe à déplacement variable à distance par action proportionnelle.

11. Système de commande selon la revendication 1, **caractérisé en ce qu'**une soupape de réduction de la pression actionnée électriquement est montée sur ladite pompe à déplacement variable.
